# EUROPÄISCHE PATENTSCHRIFT

(11) **EP 0 515 593 B1**
(45) Veröffentlichungstag und Bekanntmachung des Hinweises auf die Patenterteilung: **16.02.1994**
(21) Anmeldenummer: 91919666.7
(22) Anmeldetag: 15.11.1991
(51) Int. Cl.: D01D 5/098, D01D 4/02, D04H 1/56

(54) **VERFAHREN UND VORRICHTUNG ZUR HERSTELLUNG VON FEINSTFASERN AUS THERMOPLASTISCHEN POLYMEREN**
METHOD AND DEVICE FOR MANUFACTURING ULTRAFINE FIBRES FROM THERMOPLASTICS
PROCEDE ET DISPOSITIF POUR LA FABRICATION DE FIBRES ULTRAFINES DE POLYMERES THERMOPLASTIQUES

(30) Priorität: 15.12.1990 DE 4040242
(43) Veröffentlichungstag der Anmeldung: 02.12.1992
(73) Patentinhaber: NYSSEN, Peter, Roger, D-41542 Dormagen (DE)
(72) Erfinder: NYSSEN, Peter, Roger, D-4047 Dormagen 11 (DE); KREIMER, Armin, D-4047 Dormagen 1 (DE); WAGNER, Wolfram, D-4047 Dormagen 1 (DE); BERKENHAUS, Dirk, D-5000 Köln 50 (DE)
(86) Internationale Anmeldenummer: EP9102152
(87) Internationale Veröffentlichungsnummer: WO9210599

(56) Entgegenhaltungen:
- DE-A- 1 785 158
- DE-A- 2 237 884
- US-A- 3 806 289

## Beschreibung

Die Erfindung geht aus von einem Verfahren zur Herstellung von Feinstfasern und Feinstfaservliesen aus thermoplastischen Polymeren nach dem Schmelzblasprinzip, bei dem eine Polymerschmelze durch mindestens eine Austrittsbohrung in einer Schmelzedüse fließt und unmittelbar nach seinem Austritt beidseitig der Austrittsbohrungen mit einem Gas angeströmt und zerfasert wird. Ferner betrifft die Erfindung eine Vorrichtung zur Durchführung des Verfahrens. Das Schmelzblasverfahren (Melt Blown-Verfahren) ist in zahlreichen Veröffentlichungen beschrieben worden (siehe z.B. US 37 55 527, US 39 78 185, DE 29 48 821, US 46 22 259 und US 33 41 590). Das Schmelzblasprinzip besteht darin, daß ein aus einer Austrittsbohrung fließender Polymerschmelzestrom durch ein inertes Gas, normalerweise Luft, dessen Temperatur größer oder gleich der Schmelzetemperatur ist, in Strömungsrichtung angeblasen und dadurch zerfasert und ausgezogen wird. Eine wesentliche Zielsetzung besteht darin, die Wirtschaftlichkeit des Verfahrens durch geeignete Einstellung der Schmelzeviskosität zu verbessern. So ist es z.B. nach dem Stand der Technik bekannt, Polymere mit extrem niedriger Viskosität und damit hohen Schmelzflußraten zu verwenden, da in diesem Fall relativ feine Fasern durch Reduzierung der Temperatur der Schmelze und der Gasströmung energetisch günstiger hergestellt werden können. Die Wirtschaftlichkeit des Verfahrens wird bekanntlich durch folgende Parameter entscheidend beeinflußt:
a) Anzahl der Schmelzeaustrittsbohrungen (pro Längeneinheit) und Massendurchsatz der Schmelze pro Bohrung
b) Schmelzetemperatur und Viskosität der Schmelze
c) Gasvordruck zur Erzielung einer gleichmäßigen Strömung hoher Geschwindigkeit über die gesamte Düsenlänge
d) Temperatur der Gasströmung
e) Gasmengenstrom.

Gemäß dem Stand der Technik wird die Gastemperatur auf einen Wert größer oder gleich der Schmelzetemperatur eingestellt. Die Gasströmung tritt in allen bekannten Fallen über in Längsrichtung der Düse angeordnete Austrittsschlitze in direkter Nähe beiderseits der Schmelzebohrungen aus. Zur Erzielung einer gleichmäßigen Strömungsgeschwindigkeit über die Schlitzlänge ist der Einbau von komplizierten Strömungswiderständen und Luftverteilern in der Gaszuführung notwendig. In der PCT-Anmeldung WO 87/04195 werden entsprechende apparative Maßnahmen zur Optimierung beschrieben.

Bekannt ist ferner die Anwendung relativ großer Gasaustrittsspalte (1 mm bis 3 mm). Von Nachteil ist dabei der hohe Gasverbrauch da insbesondere zur Erzielung feinster Fasern <3 µm mittleren Durchmessers hohe Strömungsgeschwindigkeiten erforderlich sind. Die Strömungsgeschwindigkeit am Schlitzaustritt liegt üblicherweise bei 0,5 bis 0,7 der Schallgeschwindigkeit des Gases (0,5 Vₛ bis 0,7 Vₛ; Vₛ = Schallgeschwindigkeit).

Der Erfindung liegt die Aufgabe zugrunde, die Wirtschaftlichkeit des Schmelzblasverfahrens weiter zu verbessern. Insbesondere soll eine höhere Wirtschaftlichkeit bei der Herstellung von mittleren Faserdurchmessern <10 µm, vorzugsweise <5 µm, erreicht werden. Ferner soll der Schmelzedurchsatz pro Austrittsöffnung und damit die gesamte Spinnleistung der Anlage bei der Herstellung von Fasern mit einem Durchmesser zwischen 0,5 µm und 3 µm deutlich erhöht werden.

Diese Aufgabe wird erfindungsgemäß dadurch gelöst, daß das Gas in spiegelsymmetrisch zu den Austrittsbohrungen angeordneten Lavaldüsen auf Überschallgeschwindigkeit beschleunigt und in den Lavaldüsen nachgeschalteten Strömungskanälen mit konstantem oder in Strömungsrichtung sich verjüngendem Querschnitt auf eine Strömungsgeschwindigkeit dicht unterhalb der Schallgeschwindigkeit verzögert wird und daß die Polymerschmelze in die aus den Strömungskanälen austretende Gasströmung eingespeist wird. Unter "dicht unterhalb der Schallgeschwindigkeit" ist dabei ein Bereich V >0,8 V_{S}, vorzugsweise >0,9 Vₛ und (0,99 Vₛ zu verstehen. Während beim bekannten Schmelzblasverfahren die Geschwindigkeit der Gasströmung am Austritt aus den Schlitzspalten deutlich niedriger als die Schallgeschwindigkeit ist, geht die erfindungsgemäße Problemlösung von einer schallnahen Gasaustrittsgeschwindigkeit aus. Diese Lösung wird technisch mit Hilfe von Lavaldüsen realisiert, die in Richtung der Gasströmung entlang der Schmelzedüsenspitze weisen und in einem geringen Abstand vor den Schmelzeaustrittsbohrungen angeordnet sind. Dementsprechend ist die Vorrichtung zur Durchführung des Verfahrens erfindungsgemäß dadurch gekennzeichnet, daß die Gasdüsen als Lavaldüsen mit daran anschließenden Strömungskanälen mit konvergierendem oder gleichbleibendem Querschnitt ausgebildet sind, die in unmittelbarer Nähe der keilförmigen Schmelzedüsenspitze angeordnet sind und maximal 3 mm oberhalb oder unterhalb des Niveaus der Austrittsbohrungen scharfkantig abschließend enden.

Die Lavaldüsen können entweder rechteckförmigen oder kreisförmigen Querschnitt mit einem Bohrungsdurchmesser von 0,3 bis 2 mm besitzen.

Vorteilhaft schließen sich stromabwärts an die Lavaldüsen erweiterte, in den Strömungskanal einmündende Abschnitte an. Dabei sollen der Eintrittsquerschnitt des Strömungskanals das 1- bis 2,5-fache der Summe der erweiterten Querschnitte der Lavaldüsen und die Länge der Strömungskanäle das 1- bis 30-fache des erweiterten Querschnitts betragen.

Gemäß einer Weiterentwicklung ist den Lavaldüsen jeweils eine Gasruhekammer vorgeschaltet und mehrere linear angeordnete Lavaldüsen sind mit den dazugehörigen Gasruhekammern modulartig in ein Gaszuführungselement eingebaut.

Vorzugsweise sind die Gaszuführungselemente, deren Breite 25 mm bis 500 mm, vorzugsweise 50 mm bis 200 mm beträgt, so angeordnet, daß sie sowohl an die Schmelzedüse als auch untereinander gasdicht anschließen, Eine weitere vorteilhafte apparative Modifizierung besteht darin, daß die Gaszuführungselemente parallel zur keilförmigen Kontur der Schmelzedüsenspitze verschiebbar sind, so daß der Abstand der Lavaldüsen zu den Schmelzeaustrittsbohrungen einstellbar ist.

Gegenüber den bisher bekannten Schmelzblasverfahren wird eine wesentlich höhere Raum-Zeit-Ausbeute bei stabilen Betriebszuständen erreicht. Von wesentlicher Bedeutung ist dabei die Verzögerung der aus den Lavaldüsen mit Überschallgeschwindigkeit austretenden Gasströme in den darauffolgenden Strömungskanälen. Bei den Strömungskanälen wird konstruktionsbedingt jeweils eine Seite durch die äußere Wand der Schmelzedüsenspitze gebildet. Lavaldüsen und Strömungskanäle können parallel zu den äußeren Wänden der keilförmigen Schmelzedüse verstellt werden, so daß die für das Schmelzblasverfahren typischen Ausführungen "stick out"- und "set back"- Positionen eingestellt werden können. Mit der Erfindung werden folgende Vorteile erzielt:
1. Durch die Ausbildung eines schallnahen Strömungsfeldes im Bereich der Schmelzeaustrittsbohrungen kann der Verzug der Schmelze aus den Austrittsbohrungen und damit die Ausbeute stark erhöht werden.
2. Es wurde gefunden, daß bei Faserfeinheiten von weniger als 5 µm, insbesondere weniger als 3 µm, der Schmelzedurchsatz pro Bohrung deutlich erhöht werden konnte.
3. Ferner wurde gefunden, daß bei gleichen Massendurchsätzen der Schmelze gegenüber dem konventionellen Verfahren zur Erzielung gleich feiner Fasern deutlich niedrigere Gasdurchsätze erforderlich sind.
4. Zur Erzielung eines schallnahen Strömungsfeldes genügen Ruhedrücke in der Gasruhekammer von weniger als 4 bar (abs), vorzugsweise weniger als 2,5 bar (abs).
5. Die Gasverteilung über die Düsenlängsrichtung ist bei einer optimalen Fertigung der Lavaldüsen absolut gleichmäßig, so daß auf zusätzliche, in jedem Fall mit einem Druckverlust verbundene Einbauten zur Vergleichmäßigung verzichtet werden kann.
6. Der spezifische Energieverbrauch kann gegenüber dem konventionellen Schmelzeblasverfahren um den Faktor 2 bei gleicher Faserfeinheit im Bereich d <= 5 µm, vorzugsweise <= 3 µm, gesenkt werden.
7. Durch die geringere erforderliche Gasmenge wird eine gleichmäßigere Faserablage insbesondere bei sehr feinen Fasern ohne Sekundärverwirbelung auf dem Vliesablageband ermöglicht. Außerdem wird die Entstehung von Faserflug bei der Herstellung sehr feiner Fasern (<2 µm) und geringen Vliesdichten verhindert.
8. In Folge der höheren Ausziehgeschwindigkeit im schallnahen Strömungsfeld kann im Vergleich zum konventionellen Verfahren bei gleicher Faserfeinheit die Gastemperatur deutlich gesenkt werden. In Verbindung mit der geringeren Gasmenge ergibt sich auch eine geringere Verdichtung des Vliesstoffes bei der Ablage auf dem Fasertransportband; d.h. ein Vliesstoff mit geringerer Dichte und ohne Verklebung der Fasern.
9. Aufgrund der absolut gleichmäßigen Gasverteilung über die Düsenbreite können störende Randzoneneffekte vermieden werden.
10. Das Verfahren hat sich besonders bewährt bei der Herstellung von Faservliesen mit Faserfeinheiten von weniger als 3 µm, insbesondere weniger als 2 µm.
11. Die mit dem Verfahren hergestellten Vliesstoffe besitzen aufgrund ihrer niedrigeren Vliesdichte und homogenen Struktur hervorragende filtrationstechnische Eigenschaften.

Im Vergleich zum Stand der Technik ergeben sich:
- höhere Partikelabscheideleistungen bei niedrigerem Strömungswiderstand
- höheres Staubspeichervermögen
- höhere elektrostatische Aufladbarkeit der Vliese z.B. bei Anwendung einer elektrischen Corona-Entladung.

Im folgenden werden Ausführungsbeispiele der Erfindung anhand von Zeichnungen näher erläutert. Es zeigen
- Fig. 1: das Schema einer vollständigen Schmelzblasanlage
- Fig. 2: eine erfindungsgemäße Ausführung der Schmelzblasdüse einschließlich der Gaszuführungen (Seitenansicht)
- Fig. 3: einen vergrößerten Ausschnitt der Schmelzblasdüse mit kreisförmigen Lavaldüsen
- Fig. 4: einen vergrößerten Ausschnitt der Schmelzblasdüse mit schlitzförmigen Lavaldüsen
- Fig. 5: eine perspektivische Darstellung einer Schmelzblasdüse mit Luftzuführungen in Modulbauweise und
- Fig. 6: den spezifischen Energieverbrauch des Verfahrens als Funktion des mittleren Faserdurchmessers.

Faserflächengebilde, insbesondere Vliesstoffe, die nach dem Schmelzblasverfahren hergestellt werden, sind heute von großer wirtschaftlicher Bedeutung. Sie werden bei vielen Anwendungen eingesetzt, insbesondere in solchen Fällen, in denen eine besondere Faserfeinheit in Verbindung mit einer hohen Flächendeckung gefordert wird. Als Ausgangsmaterial können praktisch alle schmelzspinnbaren thermoplastischen Polymere verwendet werden. Anwendungsbeispiele sind: Filtrationsmedien, hygienische Filter, medizinische Anwendungen, Schutzkleidung, Adsorbermedien, Batteriescheidemedien, isolierende Bekleidung etc. Ferner sind Kombinationsmaterialien mit anderen Textilien oder Vliesstoffen bekannt. Der Verbesserung der Wirtschaftlichkeit des Schmelzblasverfahrens kommt daher eine große Bedeutung zu. Voraussetzung für die Verbesserung der Wirtschaftlichkeit ist eine Erhöhung der Schmelzedurchsatzrate und/oder eine Reduzierung des spezifischen Luftverbrauchs. Es versteht sich, daß diese Verbesserung nicht zu Lasten der Produktqualität gehen darf; d.h. die Produktqualität muß mindestens erhalten bleiben. Zur Herstellung von Filtrationsmedien mit hoher Filterwirksamkeit aber geringem Durchströmungswiderstand sind Feinstfasermedien mit niedrigerer Dichte bei gleicher oder höherer Faserfeinheit im Vergleich zum Stand der Technik erforderlich. Von Vorteil wäre es auch, wenn eine Erzeugung der Faserflächengebilde bei niedrigerer Gas- und Schmelzetemperatur im Vergleich zum Stand der Technik möglich ist. Dadurch könnte die Neigung zum Verkleben der Fasern bei der Vliesablage verringert werden und gleichzeitig bei temperaturempfindlichen Polymeren die Neigung zum thermischen Abbau während des Extrusions- und Spinnprozesses reduziert und gleichzeitig die Standzeit der Spinndüsen erhöht werden. Zur Herstellung einer über die Vliesbreite gleichmäßigen und homogenen Produktqualität ist eine absolut gleichmäßige und zeitlich konstante Luftverteilung erforderlich.

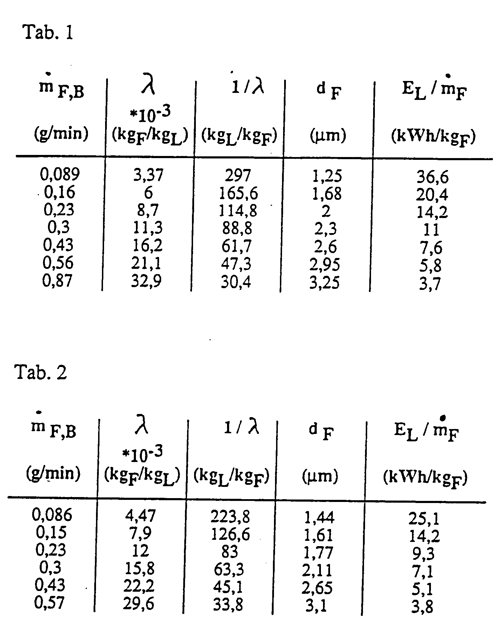

Anhand von Fig. 1 wird die Herstellung eines Faservlieses mit Hilfe des Schmelzblasverfahrens allgemein (Stand der Technik) beschrieben. Der Extruder 1 mit dem Antrieb 2 wird über den Trichter 3 mit einem Polymer beschickt. Die Polymerschmelze wird mittels einer Spinnpumpe 4 über den Schmelzefilter 5 der Schmelzblasdüse 6 zugeführt. Extruder, Spinnpumpe, Schmelzefilter, Düse und die Übergangszonen sind beheizt, um die gewünschte Schmelzetemperatur- und Viskosität einzustellen. Die Schmelzblasdüse 6 besitzt Zuführungen für das Gas 7 zur Zetfaserung, das mittels eines Kompressors zugeführt und vor dem Eintritt in die Schmelzblasdüse 6 durch einen Wärmetauscher auf die gewünschte Temperatur gebracht wird (nicht dargestellt). Die Schmelzblasdüse 6 besitzt mindestens eine lineare Reihe von feinen Bohrungen, aus denen die Schmelze unter einem von der Spinnpumpe 4 erzeugten Vordruck austritt, mittels des Gases 7 zu Feinstfasern (Kurzfasern) ausgezogen und auf einem angetriebenen Fasersammelband 9 zum fertigen Vlies 10 abgelegt wird. Ein Teil der Gasströmung wird dabei durch einen Absaugkasten 11 unterhalb des Fasersammelbandes 9 abgeführt.

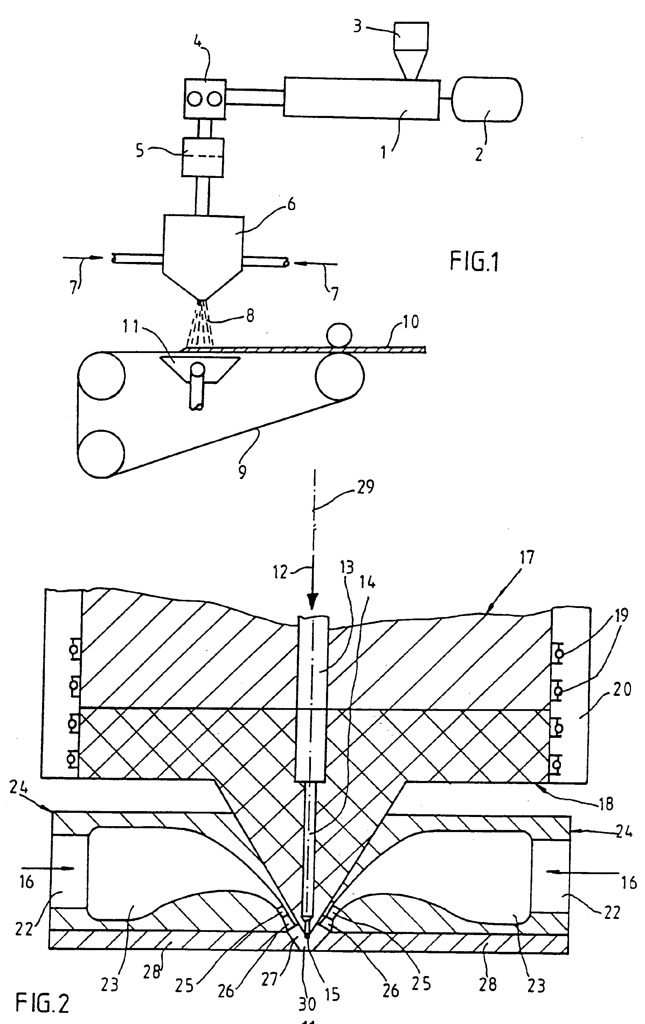

Fig. 2 zeigt einen Querschnitt durch die der Erfindung zugrundeliegende Ausführung der Schmelzblasdüse. Die Polymerschmelze 12 fließt über den Schmelzeverteiler 13 in den Spalt 14 und weiter zu den Austrittsbohrungen 15, wo sie nach dem Austritt mittels eines beidseitig zugeführten Gases 16 (Luft) hoher Strömungsgeschwindigkeit zu Feinstfasern ausgezogen wird. Der Schmelzeverteiler 13 ist innerhalb eines Düsenblocks 17 angeordnet, an den sich die Schmelzblasdüse 18 schmelzedicht anschließt. Düsenblock 17 und Schmelzblasdüse 18 werden mittels Heizleitern 19 im umfassenden Heizmantel 20 beheizt. Die keilförmige Düsenspitze 21 der Schmelzblasdüse 18 besitzt einen Winkel von 20° bis 100° , vorzugsweise 40° bis 80° . Die Schmelzeaustrittsbohrungen 15 sind (senkrecht zur Zeichenebene) linear angeordnet und besitzen einen Durchmesser von 0,1 bis 0,6 mm, vorzugsweise 0,1 bis 0,4 mm, und eine Kanallänge vom 2-bis 10-fachen ihres Durchmessers.

Das Zerfaserungsgas 16 wird beidseitig über die Bohrungen 22 Ruhekammern 23 zugeführt, die innerhalb der Gaszuführungsteile 24 angeordnet sind. Die Ruhekammern 23 münden in feine, linear angeordnete Gasbohrungen 25, die in unmittelbarer Nähe der Düsenspitze 21 angeordnet sind und parallel zu ihrer Kontur orientiert sind. Die Gasbohrungen 25 sind mit Erweiterungen 26 versehen und stellen strömungstechnisch erweiterte Lavaldüsen (25, 26) dar. An die Erweiterungen 26 schließt sich jeweils ein Strömungskanal 27 an, der einerseits durch die Kontur der Schmelzedüsenspitze 21 und andererseits durch die Bodenplatten 28 begrenzt wird, wobei die Bodenplatten 28 scharfkantig in der Nähe des Scheitelpunkts der Düsenspitze 21 abschließen. Die Gaszuführungsteile 24 mit den Ruhekammern 23 und den Lavaldüsen 25, 26 sind beidseitig und Spiegelsymmetrisch zu den Austrittsbohrungen 15 bzw. zur Düsenachse 29 angeordnet.

Die Gaszuführungsteile 24 liegen gasdicht an der Kontur der keilförmigen Düsenspitze 21 an und sind parallel zu den keilförmigen Flächen verschiebbar, Auf diese Weise kann der Abstand der Lavaldüsen 25, 26 zu den Schmelzeaustrittsbohrungen 15 eingestellt werden. In Abhängigkeit von den Polymerspezifikationen und den gewünschten Vlieseigenschaften kann damit die Mündung der Schmelzeaustrittsbohrungen 15 gegenüber der scharfkantigen Mündung der austretenden Gasstrahlen in Strömungsrichtung in gewünschtem Maße zurück- oder vorversetzt werden. Außerdem können die Bodenplatten 28 quer zur Düsenachse 29 verschoben werden, wodurch eine genaue Einstellung des Strömungspalts 30 bzw. der Strömungskanäle 27 ermöglicht wird.

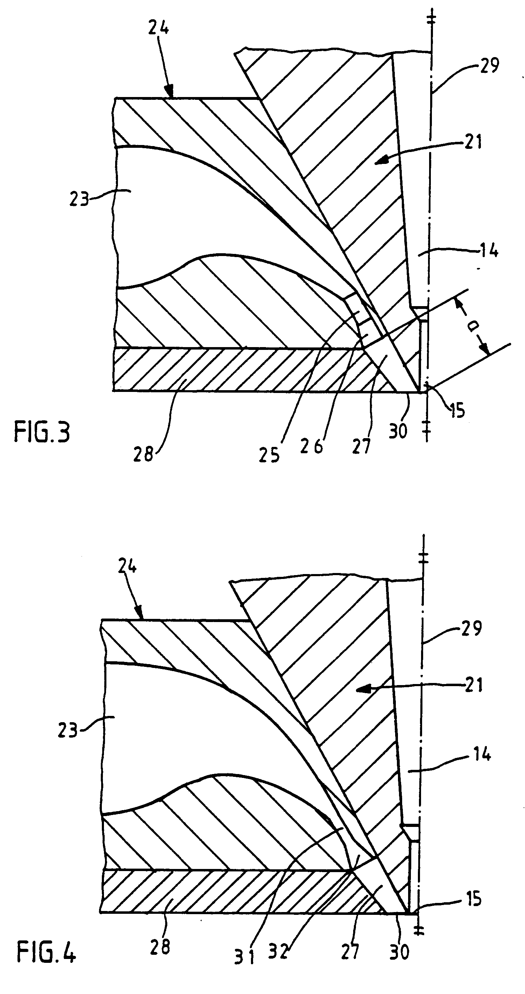

Die Gasbohrungen 25 der Lavaldüsen weisen einen Durchmesser von 0,3 bis 2,0 mm, vorzugsweise 0,4 mm bis 1 mm, und eine Lange vom 0,3- bis 5-fachen des Durchmessers auf. Die Erweiterung 26 im Anschluß an die Gasbohrungen 25 besitzt einen Gesamtwinkel von 5° bis 30° , vorzugsweise 10° bis 20° . Die Erweiterung 26 wird kegelförmig ausgeführt, entweder rotationssymmetrisch zur Bohrungsachse der Gasbohrung 25 oder in einem Winkel geneigt zur Bohrungsachse (wie in Fig. 3 dargestellt). Die zuletzt erwähnte Form hat den Vorteil, daß die Lavaldüsen 25, 26 in unmittelbarer Nähe der Düsenspitze 21 angebracht werden können. Der Querschnitt der darauffolgenden Strömungskanäle 27 ist in Strömungsrichtung konvergent oder gleichbleibend (konstant). Die Länge der Strömungskanäle 27 beträgt das 1- bis 30-fache, vorzugsweise das 3- bis 20-fache des größten Durchmessers der Erweiterungen 26 an den Lavaldüsen. Sie dienen vor allem zur Ausbildung eines in Längsrichtung der Strömungskanäle 27 gesehenen homogenen Strömungsfeldes mit einer schallnahen Strömungsgeschwindigkeit.

Aufgrund der Lavaldüsen 25, 26 und bei Einstellung eines mindestens dem kritischen Lavaldruckverhältnis von 0,53 entsprechenden Druckverhältnis zwischen dem Strömungskanal 27 und der Gasruhekammer 23 stellt sich aufgrund der bekannten Strömungegesetzmäßigkeiten in der Lavalbohrung 25 eine Strömungsgeschwindigkeit ein, die der Schallgeschwindigkeit bei der vorgegebenen Temperatur entspricht. Diese Gesetzmäßigkeit gilt für alle Lavalbohrungen 25, so daß über die Länge der Schmelzblasdüse 18 (senkrecht zur Zeichenebene) eine absolut gleichmäßige Gasströmung nach dem Austritt aus dem Strömungsspalt 30 erzielt wird. Zur Einstellung dieser Strömungsverhältnisse genügen Vordrucke in den Gasruhekammern 23 von 1,9 bis 5 bar (abs), vorzugsweise 1,9 bis 2,5 bar (abs). Die Erweiterung 26 an den Lavaldüsen dient zur Beschleunigung der Strömung auf Öberschall und zur Verbesserung der Flächenhomogenität der Strömung beim Eintritt in den Strömungskanal 27. Durch die parallele bzw. konvergente Strömungsführung im Strömungskanal 27 wird die Strömungsgeschwindigkeit aufgrund der Überschalldiffusorwirkung auf eine schallnahe Geschwindigkeit bei einer optimalen Flächenhomogenität in der Nähe des Strömungsspaltes 30 reduziert. Unter schallnaher Geschwindigkeit" wird dabei verstanden, daß die Strömungsgeschwindigkeit höchstens 20 %, vorzugsweise maximal 10 % unterhalb der Schallgeschwindigkeit liegt. Der Eintrittsquerschnitt der Strömungskanäle 27 beträgt das 1,0- bis 2,5-fache der Summe der Querschnitte der Erweiterungen 26 an den Lavaldüsen und der Austrittsquerschnitt das 0,8-bis 2,5-fache dieser Summe. Aufgrund dieser Maßnahmen wird eine hohe Strömungsstabilität und -homogenität in dem kritischen Bereich der Austrittsbohrungen 15 erreicht.

Fig. 3 zeigt die Anordnung der Gasruhekammer 23 der Lavaldüse 25, 26 und des Strömungskanals 27 noch einmal in vergrößerter Darstellung. Die Wandstärke des Gaszuführungsteils 24 in Hohe der Gasbohrungen 25 (Lavalbohrungen) zur Außenwand der Düsenspitze 21 wird soweit minimiert wie dies aus fertigungstechnischen Gründen noch möglich ist. Die scharfkantige Mündung des Strömungskanals 27 (als Strömungsspalt 30 bezeichnet) liegt hier auf gleicher Höhe wie die Schmelzeaustrittsbohrung 15. Die Gasruhekammer 23 ist hier ausgehend von einem relativ großen Querschnitt zu den Lavalbohrungen 25 hin stetig verjüngend ausgebildet, was zu einer Minimierung des Strömungswiderstandes im Unterschallbereich beiträgt. Der Abstand a, das ist die Länge des Strömungskanals 27, liegt im Bereich von 1 mm bis 50 mm, vorzugsweise 2,5 mm bis 30 mm.

Fig. 4 zeigt eine alternative Ausführung der Lavaldüsen mit einer schlitzförmigen Geometrie. Sowohl die Lavalöffnung als auch die sich daran anschließende Erweiterung sind hier schlitzförmig ausgebildet. Die Lavaldüse besteht somit aus dem Lavalschlitz 31 und dem darauf folgenden schlitzförmigen Erweiterungsschacht 32. Die Lavaldüsen 31, 32 erstrecken sich mit ihrem schlitzförmigen Querschnitt über die gesamte Breite der Düsenspitze (senkrecht zur Zeichenebene). Der Erweiterungsschacht hat einen Gesamtwinkel von 5° bis 30° , vorzugsweise 10° bis 15° . An den Erweiterungsschacht 32 schließt sich wie bei der Ausführung nach Fig. 2 ein Strömungskanal 27 mit konvergierendem oder gleichbleibendem Querschnitt an, der mit dem Spalt 30 abschließt, Bei allen Ausführungen der Fig. 2 bis Fig. 5 besteht das Zerfaserungsgas, das die Zerfaserung und den Verzug der aus den Austrittsbohrungen 15 fließenden Schmelzestränge bewirkt, aus den durch die Strömungskanäle 27 von beiden Seiten her auf die Schmelzestränge gerichteten Gasströmen.

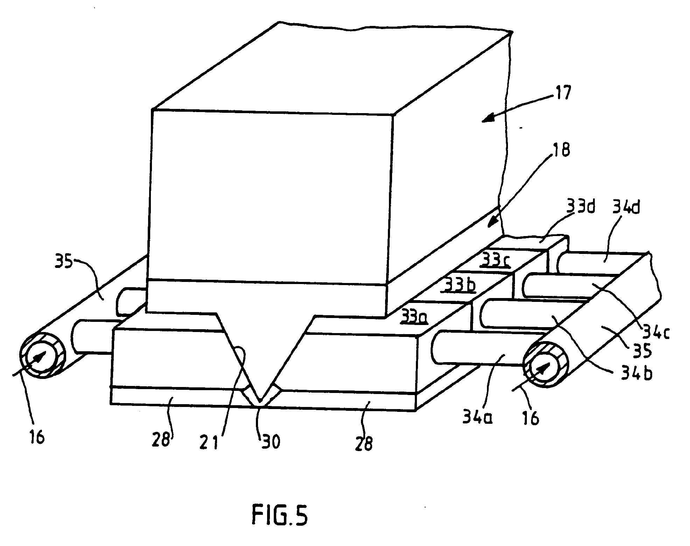

Fig. 5 zeigt eine besonders vorteilhafte Konstruktion, bei der seitlich der Schmelzblasdüse 18 eine Reihe von Luftzuführungselementen 33a, 33b, 33c, 33d .... modulartig hintereinander bzw. nebeneinander angeordnet sind. Jeder Modul ist über eine Leitung 34a, 34b .... mit einem Verteilerrohr 35 verbunden, das mit dem Zerfaserungsgas 16 gespeist wird. In jedem Gaszuführungselement ist eine Ruhekammer 23 untergebracht, wobei jeweils mehrere Lavaldüsen 25, 26 mit kreisförmigem Querschnitt oder eine schlitzförmige Lavaldüse 31, 32 von der Ruhekammer gespeist werden. Die Gaszuführungselemente 33a, 33b .... sind stirnseitig geschlossen, so daß sie separat wirksame Einheiten darstellen, die gasdicht aneinander anschließen. Wie in Fig. 5 dargestellt und entsprechend der Grundausführungsform gemäß Fig. 2 sind die Gaszuführungselemente zu beiden Seiten der Düsenspitze 21 spiegelbildlich (zur Mittelebene der Schmelzblasdüse 18) angeordnet.

Die Ausführung nach Fig. 5 besitzt insbesondere bei der Herstellung von Faservliesen großer Breite (große Vliesbreiten) folgende Vorteile:
- die Gasströmung in den Spalten 30 ist auch bei großen Düsenabmessungen über die gesamte Breite absolut gleichmäßig
- sofern die Modulbreite nicht zu groß gewählt wird, kann ein Verlaufen der Lavalbohrungen 25 bzw. der Lavalschlitze 31 bei der Fertigung der Lavaldüsen vermieden werden. Geeignete Modulbreiten liegen im Bereich von 25 bis 500 mm, vorzugsweise 50 bis 200 mm.
- Die Modulbauweise erlaubt eine optimale Anpassung der Luftzuführungselemente an die Schmelzblasdüse 18.
- Unterschiedliche Vliesbreiten können in einfacher Weise eingestellt werden.

### Beispiel

Polypropylen der Firma Exxon, Type PD 3495 mit einem melt flow index von 800 g/10 min wurde gemäß Fig. 1 aufgeschmolzen und einer Schmelzblasdüse gemäß Fig. 2 und 3 mit folgenden charakteristischen Abmessungen zugeführt.
Durchmesser der Schmelzeaustrittsbohrungen 15: 0,3 mm
Kanallänge: 3,8 mm
Teilung in Düsenlängsrichtung: 1,25 mm
Öffnungswinkel der Schmelzedüsenspitze 21: 60°
Durchmesser der Lavalbohrung 25: 0,6 mm
Länge der Lavalbohrung 26: 0,3 mm
Erweiterung 26 der Lavaldüse: Gesamtwinkel 15°: Enddurchmesser:0,7 mm
Teilung der Bohrungen: 0,8 mm
Strömungskanal 27: Anfangsbreite 0,8 mm; Breite am Austritt (in Höhe der scharfkantigen Mündung): 0,7 mm;
Länge: 2,3 mm
Modulbreite: 50 mm
Anzahl der Module: auf jeder Seite 2

Die scharfkantige Mündung des Luftaustrittsspaltes (Strömungsspalt) 30 lag auf gleicher Höhe mit der Düsenspitze 21. Als Zerfaserungsgas wurde Luft verwendet, die in einem Schraubenkompressor verdichtet und in einem nachgeschalteten elektrischen Erhitzer auf die erforderliche Temperatur erwärmt wurde.

Bei der Vliesbildung wurde ein Teilvolumenstrom des Zerfaserungsgases mittels Absaugung 11 entfernt.

Aus Tabelle 1 gehen die Ergebnisse hinsichtlich Faserbeladung, Faserdurchmesser und spezifischem Energieverbrauch hervor, wobei folgende Verfahrensparameter an der Anlage eingestellt waren:
Ruhedruck der Luft in der Gasruhekammer 23: 3 bar (abs),
Ruhetemperatur der Luft: 285°C,
Schmelzetemperatur: 230° C,
Vordruck der Schmelze vor dem Filter 5 (siehe Fig. 1): 35 bar.

Mit diesen Verfahrensbedingungen ergibt sich in den Lavaldüsen eine Schallgeschwindigkeit von ca. 440 m/sec und eine Strömungsgeschwindigkeit von ca. 5 % unterhalb der Schallgeschwindigkeit am Strömungsspalt 30. Der Abstand zwischen der Schmelzblasdüse 21 und dem Fasersammelband 9 betrug 0,3 m. In Tabelle 2 sind die Ergebnisse einer weiteren Versuchsreihe dargestellt, wobei der Ruhedruck der Luft in den Ruhekammern 23 auf 2,2 bar (abs) gesenkt wurde und die Gastemperatur auf 294°C erhöht wurde. Die anderen Betriebsparameter blieben unverändert.

Es bedeuten
ṁ_{F,B} Massendurchsatz der Schmelze pro Bohrung
λ Beladung des Luftstromes (Verhältnis des Fasermassenstromes zum Blasluftmassenstrom)
1/λ Blasluftverbrauch, bezogen auf die produzierte Fasermenge
d_{F} mittlerer Faserdurchmesser
E_{L}/ṁ_{F} spezifischer Netto-Energieverbrauch zur Verdichtung und Erhitzung der Blasluft, bezogen auf die Fasermenge und bei einer Eintrittstemperatur von 40°C der Luft in den elektrischen Lufterhitzer.

Es zeigt sich, daß in beiden Versuchsreihen eine hohe Faserfeinheit bei sehr günstigen Energieverbrauchszahlen erreicht werden kann. In der zweiten Versuchsreihe ergaben sich insbesondere für Faserfeinheiten von weniger als 2,5 µm noch deutlich niedrigere Energieverbrauchsziffern.

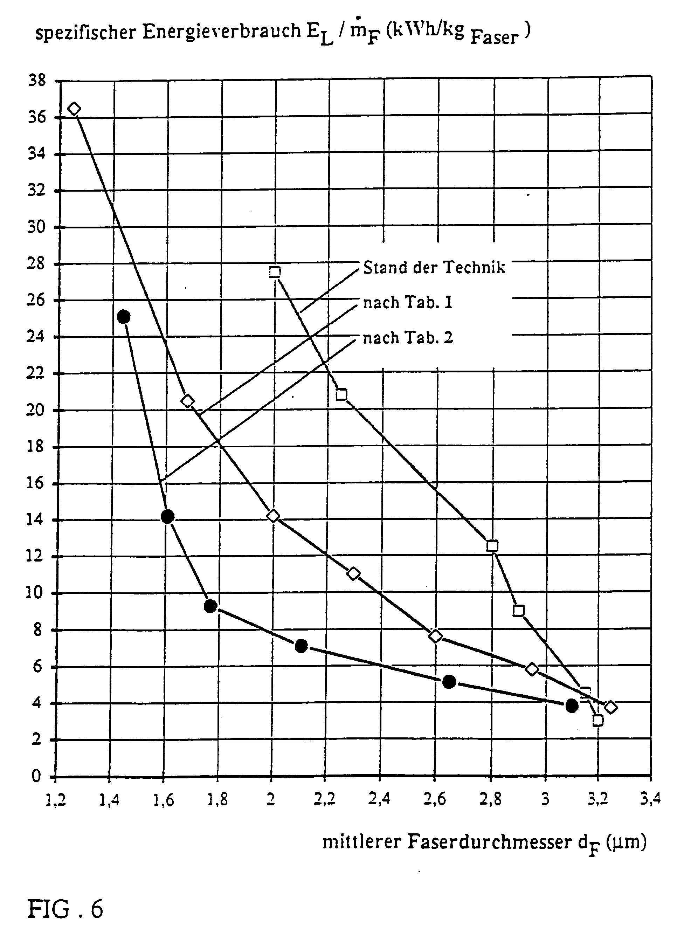

Das Diagramm (Fig. 6) zeigt einen Vergleich der beiden Versuchsreihen mit schallnaher Gasströmung zum konventionellen Melt Blown-Verfahren bei gleicher Anzahl der Schmelzebohrungen 15 pro cm Düsenbreite. Alle angegebenen mittleren Faserdurchmesser wurden mit Hilfe einer einheitlichen aerodynamischen Prüfmethode gemessen. Man erkennt, daß die Vorteile von schallnaher Gasströmungsgeschwindigkeit, insbesondere bei mittleren Faserdurchmessern von weniger als 3 µm zum Tragen kommen.

Hinsichtlich der physikalischen Eigenschaften zeichneten sich die nach dem erfindungsgemäßen Verfahren hergestellten Vliese durch eine sehr geringe Dichte und einen sehr weichen Griff aus. Verklebungen waren nicht festzustellen. Unabhängig vom Abstand zum Fasersammelband 9 und auch bei feinen Faserdurchmessern <2 µm war praktisch kein Faserflug festzustellen.

## Patentansprüche

1. Verfahren zur Herstellung von Feinstfasern und Feinstfaservliesen aus thermoplastischen Polymeren nach dem Schmelzblasprinzip mit mittleren Faserdurchmessern von 0,2 µm bis 15 µm, vorzugsweise 0,5 µm bis 10 µm, bei dem eine Polymerschmelze (12) durch mindestens eine Austrittsbohrung (15) in einer Schmelzblasdüse (18) fließt und unmittelbar nach seinem Austritt beidseitig der Austrittsbohrungen (15) mit Gas angeströmt und zerfasert wird, dadurch gekennzeichnet, daß das Gas (16) in spiegelsymmetrisch zu den Austrittsbohrungen (15) angeordneten Lavaldüsen (25, 26 bzw. 31, 32) auf Überschallgeschwindigkeit beschleunigt und in den Lavaldüsen nachgeschalteten Strömungskanälen (27) mit konstantem oder in Strömungsrichtung sich verjüngendem Querschnitt auf eine Strömungsgeschwindigkeit dicht unterhalb der Schallgeschwindigkeit verzögert wird und daß die Polymerschmelze (12) in die aus den Strömungskanälen (27) austretende Gasströmung eingespeist wird.

2. Vorrichtung zur Durchführung des Verfahrens nach Anspruch 1, bestehend aus einer Schmelzblasdüse mit beidseitigen Gaszuführungselementen und auf die Austrittsbohrungen (15) gerichteten Gasdüsen, dadurch gekennzeichnet, daß die Gasdüsen als Lavaldüsen (25, 26 bzw. 31, 32) mit daran anschließenden Strömungskanälen (27) mit konvergierendem oder gleichbleibendem Querschnitt ausgebildet sind, die in unmittelbarer Nähe der keilförmigen Düsenspitze (21) angeordnet sind und maximal 3 mm oberhalb oder unterhalb des Niveaus der Austrittsbohrungen (15) scharfkantig enden.

3. Vorrichtung nach Anspruch 2, dadurch gekennzeichnet, daß die Lavaldüsen (30, 31) schlitzförmigen Querschnitt aufweisen.

4. Vorrichtung nach Anspruch 2, dadurch gekennzeichnet, daß die Lavaldüsen (25, 26) jeweils aus einer Lavalbohrung (25) von 0,3 bis 2 mm Durchmesser bestehen.

5. Vorrichtung nach Anspruch 3 oder Anspruch 4, dadurch gekennzeichnet, daß sich an die Lavaldüsen (25, 26 bzw. 31, 32) erweiterte, in den Strömungskanal (27) einmündende Abschnitte (26, 32) anschließen und daß der Eintrittsquerschnitt des Strömungskanals (27) das 1,0- bis 2,5-fache der Summe der erweiterten Querschnitte der Lavaldüsen, der Austrittsquerschnitt das 0,8- bis 2,5-fache dieser Summe und die Länge des Strömungskanals (27) das 1- bis 30-fache des erweiterten Querschnitts betragen.

6. Vorrichtung nach Anspruch 2 bis 5, dadurch gekennzeichnet, daß mehreren linear angeordneten Lavalbohrungen (25, 26) bzw. einer schlitzförmigen Lavaldüse (30, 31) eine Gasruhekammer (23) vorgeschaltet ist und die Lavaldüsen (25, 26 bzw. 30, 31) mit der dazugehörigen Gasruhekammer (23) modulartig in ein Gaszuführungselement (33a bis 33d) integriert sind.

7. Vorrichtung nach Anspruch 6, dadurch gekennzeichnet, daß die Gaszuführungselemente (33a ... 33d), deren Breite 25 mm bis 500 mm, vorzugsweise 50 mm bis 200 mm, beträgt, gasdicht untereinander und an die Schmelzblasdüse (18) anschließend angeordnet sind.

8. Vorrichtung nach Anspruch 6 bis 7, dadurch gekennzeichnet, daß die Gaszuführungselemente (33a ... 33d) parallel zur keilförmigen Kontur der Schmelzedüsenspitze (21) verschiebbar sind, so daß der Abstand der Lavaldüsen (25, 26 bzw. 31, 32) zu den Schmelzeaustrittsbohrungen (15) einstellbar ist.

## Claims

1. A process for the production of microfibres and non-woven microfibre webs from thermoplastic polymers by the melt-blowing technique, in which the mean fibre diameters are 0,2 µm to 15 µm, preferably 0,5 µm to 10 µm, and in which a polymer melt (12) flows through at least one orifice (15) in a melt-blowing die (18) and is separated into fibres by a gas which impinges on the melt from both sides immediately after its exit from the orifices (15), characterised in that the gas (16) is accelerated to supersonic speed in Laval nozzles (25, 26 or 31, 32) arranged mirror-symmetrically in relation to the melt orifices (15) and is decelerated to a rate of flow just below sonic speed in flow channels (27) arranged downstream of the Laval nozzles and having a constant or tapered cross-section in the direction of flow, and in that the polymer melt (12) is directed into the gas stream issuing from the flow channels (27).

2. A device for carrying out the process according to claim 1, comprising a melt-blowing nozzle with gas supply elements on both sides and gas nozzles directed towards the melt orifices (15), characterised in that the gas nozzles are designed in the form of Laval nozzles (25, 26 or 31, 32) with flow channels (27) arranged downstream thereof which have a convergent or constant cross-section, and which are arranged in direct proximity to the wedge-shaped die tip (21) and terminate with a sharp edge at most 3 mm above or below the level of the melt orifices (15).

3. A device according to claim 2, characterised in that the Laval nozzles (30, 31) have a slot-shaped cross-section.

4. A device according to claim 2, characterised in that the Laval nozzles (25, 26) each consist of a Laval opening (25) of an orifice diameter of 0,3 to 2 mm.

5. A device according to claim 3 or 4, characterised in that widened sections (26, 32) which lead into the flow channel (27) are arranged downstream of the Laval nozzles (25, 26 or 31, 32) and in that the inlet cross-section of the flow channel (27) is 1,0 to 2,5 times the sum of the widened cross-sections of the Laval nozzles, the outlet cross-section is 0,8 to 2,5 times this sum and the length of the flow channel (27) is 1 to 30 times the widened cross-section.

6. A device according to claim 2 to 5, characterised in that a gas smoothing chamber (23) is arranged upstream of several linearly arranged Laval orifices (25, 26) or of one slot-shaped Laval nozzle (30, 31) and the Laval nozzles (25, 26 or 30, 31) together with corresponding gas smoothing chamber (23) are integrated in the form of individual units to form a modular gas supply element (33a to 33d).

7. A device according to claim 6, characterised in that the gas supply elements (33a ...33d), the width of which is 25 mm to 500 mm, preferably 50 mm to 200 mm, are arranged in a gas-tight manner next to each other and to the melt-blowing nozzle (18),

8. A device according to claims 6 and 7, characterised in that the gas supply elements (33a ... 33d) are displaceable parallel to the wedge-shaped contour of the melt die tip (21), to allow the adjustment of the distance between the Laval nozzles (25, 26 or 31, 32) and the melt orifices (15).

## Revendications

1. Procédé de la fabrication des fibres ultrafines et des toisons de fibres ultrafines,produit des polymères thermoplastiques d'après le principe de fusion pneumatique avec un diamètre moyen de fibre de 0,2 µm à 15 µm, de préférence entre 0,5 µm à 10 µm,auquel une fusion polymère (12) s'écoule par au minimum d'un seul orifice d'échappement (15) dans une buse soufflante en fusion (18) et laquelle sera affluée et effilochée immédiatement après sa sortie des deux côtés du orifice d'échappement (15), caractérisé en ce que le gaz (16) sera accéléré jusqu'à la vitesse supersonique dans des buses-Laval (25,26 resp. 31,32) disposées symétriquement aux orifices d'échappement (15) et qu'il soit ralenti dans des canaux de flux (27) succedés avec une section constante ou bien se reduisant en direction de flux sur une autre vitesse de flux laquelle se trouve juste au dessous de la vitesse de son,et que la fusion polymère (12) sera chargée dans le flux de gaz échappé des canaux de flux (27).

2. Dispositif de la réalisation des procédés selon la revendication 1 se composant d'une buse soufflante en fusion avec des éléments d'amenage de gaz de deux côtés et des buses de gaz dirigées vers les orifices d'échappement (15) , caractérisé en ce que les buses des gaz seront formées comme buses-Laval (25,26 resp. 31,32) avec des canaux de flux (27) reliés d'une section convergeante ou bien homogène,lesquelles seront arrangées à proximité immédiate des pointes de buses cunéiformes (21) et qui se trouvent à une distance maximale de 3 mm au dessus ou bien au dessous du niveau des orifices d'échappement (15) se terminant à angles vifs.

3. Dispositif selon la revendication 2,caractérisé en ce que les buses-Laval (30,31) présentent une section en forme de fente.

4. Dispositif selon la revendication 2,caractérisé en ce que les buses-Laval (25,26) se composent respectivement d'un orifice-Laval (25) d'un diamètre de 0,3mm à 2 mm.

5. Dispositif selon la revendication 3,ou bien la revendication 4,caractérisé en ce que des segments (26,32) elargis débouchant au canal de flux (27) se joignent aux buses Laval (25,26 resp. 31,32) et que la section d'entrée du canal de flux (27) s'élève de 1,0 à 2,5 fois de la somme de la section élargie des buses Laval et que la section de sortie s'élève de 0,8 à 2,5 fois de cette somme et la longueur du canal de flux (27) s'élève 1 à 30 fois de la section élargie.

6. Dispositif selon les revendications 2 à 5,caractérisé en ce qu'une chambre de repos des gaz (23) est intercalée à plusieurs orifices-Laval (25,26) disposées linéairement,respectivement à une buse Laval (30,31) en forme de fente et que les buses Laval (25,26 resp. 30,31) avec la chambre de repos des gaz (23) appartenant seront intégrées en forme de module dans un élément d'amenage de gaz (33a à 33d).

7. Dispositif selon la revendication 6,caractérisé en ce que les éléments d'amenage de gaz (33a à 33d),dont la largeur s'élève entre 25 mm à 500mm,de préférence entre 50mm à 200mm,sont étange au gaz les uns aux autres et ensuite arranger à la buse soufflante en fusion (18).

8. Dispositif selon les revendications 6 à 7,caractérisée en ce que les éléments d'amenage de gaz (33a à 33d) sont mobiles parallélement au contour de la pointe de buse de fusion cunéiforme (21),ainsi que la distance de buses-Laval (25,26 resp. 31,32) est ajustable aux orifices d'échappement de fusion (15).
